# EUROPEAN PATENT APPLICATION

(11) **EP 3 875 506 A1**
(43) Date of publication of application: **08.09.2021**
(21) Application number: 19828821.9
(22) Date of filing: 30.10.2019
(51) Int. Cl.: C08F 293/00

(54) **METHOD OF OBTAINING ABA BLOCK COPOLYMERS, OBTAINABLE PRODUCTS AND USES THEREOF**

(30) Priority: 30.10.2018 PT 2018115119
(71) Applicant: Companhia Industrial de Resinas Sintéticas, CIRES, Lda., 3960-160 Avanca, Estarreja (PT)
(72) Inventor: JORDÃO COELHO, Jorge Fernando, 3030-509 Coimbra (PT); COIMBRA SERRA, Arménio, 3030-185 Coimbra (PT); ROCHA ABREU, Carlos Miguel, 3030-393 Coimbra (PT); FONSECA DE OLIVEIRA GONÇALVES, Pedro Manuel, 3810-416 Aveiro (PT); CARVALHO TOMÁS, Arnaldo José, 3040-570 Antanhol, Coimbra (PT); CARDOSO DA COSTA MARQUES, Joana Rita, 3860-366 Estarreja (PT)
(74) Representative: Patentree
(86) International application number: PCT/IB2019/059303
(87) International publication number: WO 2020/089807

(57) **Abstract**

Synthesis of ABA block copolymers (PVC-b-PBA-b-PVC) from PBA macroinitiators using the SET-DTLRP technique, with the introduction of a temperature step. This introduction of a temperature step is important so that the synthetized block copolymer presents mechanical properties identical to those of plasticised PVC (commercial).

The present invention further describes a flexible ABA block copolymer (PVC-b-PBA-b-PVC) and the use thereof in the manufacture of different items.

## Description

### Technical field

The present description refers to the synthesis of ABA block copolymers of Poly(vinyl chloride)-b-Poly(alkyl acrylate)-b-Poly(vinyl chloride) from macroinitiators produced from acrylic monomers using the SET-DTLRP technique (*Single electron transfer-degenerative chain transfer mediated living radical polymerization*), with the introduction of an intended variation in the polymerization temperature.

The present invention further discloses a flexible ABA block copolymer (PVC-b-PBA-b-PVC) and the use thereof in the manufacture of different items, namely coatings, upholsteries, films, foams, among others.

### Background art

Document US 9,475,931 B2 (LG CHEM, LTD.; October 25, 2016) describes a water-dispersible polyalkyl acrylate-based material, containing halogen as end group, a vinyl chloride-based block copolymer and a method of obtaining the same. The process uses a water-dispersible polyalkyl acrylate derivative containing halogen as end group as an initiation agent for the polymerization of a vinyl chloride-based monomer. With this material, it is possible to obtain several effects such as the reduction of particle coagulation and particle adhesion to the wall of a reactor, improve the efficiency of the reaction and the polydispersity index, and yellowing prevention.

WO 2010/065809 A1 (Percec V.; June 10, 2010) describes a process for the production of a multi-arm star-shaped polymer, comprising the polymerization of polyvinyl chloride with a multifunctional initiator in the presence of Na₂S₂O₄ and water. The invention also refers to polymers made by the described processes and items made from the polymers.

Documents US 7,345,127 B2 (Percec V.; March 18, 2008) and US 7,470,762 B2 (Percec V.; December 30, 2008) describe that acrylic polymers are made by living radical polymerization of acrylic monomers using halogenated organic initiators with metallic or non-metallic catalysts. Furthermore, the block copolymers of acrylic monomers are the result of the polymerization of acrylic monomers with vinyl halide monomers using a halogenated organic initiator in the presence of metallic or non-metallic catalysts.

Documents US 6,911,515 B2 (Percec V., June 28, 2005) and US 7,026,420 B2 (Percec V.; April 11, 2006) describe a living polymerization process for the preparation of poly(vinyl chloride) (PVC) with controlled molecular weight. The polymerization reaction may be initiated by several initiators of poly-halocarbons in conjunction with non-metallic reducing reagents of electron transfer as catalysts. The process occurs at room temperature in aqueous or aqueous-organic solvent. The polymerization confers on PVC a controlled molecular weight and a narrow molecular weight distribution.

Coelho, J. F. J., et al., "Synthesis of Poly(vinyl chloride)-b-Poly(n-butyl acrylate)-b-Poly(vinyl chloride) in Competitive Single-Electron-Transfer/Degenerative-Chain-Transfer-Mediated Living Radical Polymerization in Water", Journal of Polymer Science Part A Polymer Chemistry, Vol. 44, N. 9, pp. 3001-3008, May 2006; describes the synthesis of a block copolymer of poly(vinyl chloride)-b-poly(n-butyl acrylate)-b-poly(vinyl chloride) - ABA, wherein the polymerization step does not include the increase in the copolymerization temperature with vinyl chloride.

Coelho, J. F. J., et al., "Scaling-up of poly(vinyl chloride) prepared by single electron transfer degenerative chain transfer mediated living radical polymerization in water media II: High molecular weight-ultra stable PVC", Chemical Engineering Science, Vol. 69, N. 1, pp.122-128, 2011-10-05, and Coelho, J. F. J., et al., "Thermal and mechanical characterization of poly(vinyl chloride)-b-poly(butyl acrylate)-b-poly(vinyl chloride) obtained by single electron transfer- degenerative chain transfer living radical polymerization in water", European Polymer Journal, Vol. 42, N. 10, pp. 2313-2319, 2006-10-01; however, in none of the cases the polymerization step includes the increase in copolymerization temperature with vinyl chloride.

These facts are described in order to illustrate the technical problem addressed by the present invention.

### General description

Poly(vinyl chloride) (PVC) is one of the most used polymers in the world due to its high versatility, performance and low cost. For many end applications, PVC is additivated with significant amounts of plasticiser(s) in order to obtain the required flexibility. The use of external plasticisers in current technology entails uncountable problems which are related to the migration of the plasticisers to the outside of the polymeric matrix, which implies the loss of the mechanical properties of the material and raises safety questions related to the toxicity of the migrating plasticiser. Thus, the preparation of PVC-based block copolymers with intrinsically flexible behaviour aims at the elimination of the current need of use of external plasticisers.

One of the aspects of the synthesis method of the present disclosure is the production of PVC-based flexible materials with technical specifications similar to the current ones, however free of external plasticisers, which will be assured by the use of polyacrylate-based polymeric segments, attached to the PVC chain still in the reaction phase, which allows to decrease the glass transition temperature (Tg) of the material, conferring on this PVC-based product a flexible behaviour.

The present disclosure describes the synthesis of ABA block copolymers of Poly(vinyl chloride)-b-Poly(alkyl acrylate)-b-Poly(vinyl chloride) from macroinitiators produced from acrylic monomers using the SET-DTLRP technique *(Single electron transfer-degenerative chain transfer mediated living radical polymerization),* with the introduction of a variation in the polymerization temperature. More specifically, the application of one or several temperature steps of the copolymerization of polyalkyl acrylate, namely poly(butyl acrylate), and vinyl chloride in aqueous medium to obtain Poly(vinyl chloride)-b-Poly(alkyl acrylate)-b-Poly(vinyl chloride). The copolymerization temperature is kept up to a maximum of 42°C during a period of time needed for the desired conversion, which can vary between 00:30h to 5:00h and, later, increased in one step or multiple steps to a temperature higher than 50°C until the final conversion is achieved.

This variation of the copolymerization temperature is such that the synthesized block copolymer presents mechanical properties which are identical to those of poly(vinyl chloride) (PVC), normally obtained by the free radical polymerization technique, and then subjected to a mixture with one or more plasticisers, in different concentrations, in order to confer the flexibility required by the final item.

One of the aspects of the present invention describes a method of obtaining block copolymers of poly(vinyl chloride)-b-poly(n-butyl acrylate)-b-poly(vinyl chloride) -ABA, by living radical polymerization, mediated by degenerative chain transfer and single electron transfer - SET-DTLRP comprising:

macroinitiators of acrylic type and vinyl chloride monomers, wherein the copolymerization step includes at least one increase in the copolymerization temperature of vinyl chloride in aqueous medium, the increase corresponding to a value of polymerization temperature to a range between 50 ° C and 90 ° C. In an embodiment, the increase in the copolymerization temperature is obtained by the introduction of at least: a temperature step; a ramped temperature increase; or combinations thereof.

In an embodiment, the polymerization step includes at least the introduction of an isothermal step of temperature in the copolymerization temperature with vinyl chloride, in aqueous medium, wherein the value of the isothermal level of the step in the polymerization temperature may be between 50°C to 90°C.

In an embodiment, the polymerization step may include at least one step in the polymerization temperature after about 1/5 of the total copolymerization time had elapsed.

In an embodiment, the value of the isothermal level in the polymerization temperature may be between 50°C to 90°C, preferably 80°C.

In an embodiment, the acrylic monomer macroinitiator is an alkyl acrylate macroinitiator, preferably is poly(butyl acrylate) - PBA.

In an embodiment, the acrylic monomer macroinitiator is obtained by the polymerization of butyl acrylate (BA).

In an embodiment, the synthesis of poly(alkyl acrylate) macroinitiators, in particular PBA, occurs at a constant temperature with a value of between 155-50 °C, preferably 25-44 °C, more preferably 25 °C.

In an embodiment, the poly (alkyl acrylate) macroinitiators comprise a polymerization degree of at least 400 with a maximum of 4500, preferably a polymerization degree which varies between 490-1960 and more preferably between 980-1050.

In an embodiment, the synthesis of poly(alkyl acrylate) macroinitiators occurs with an inert gaseous phase, with the introduction of nitrogen (N₂), at a pressure between 4 (+/-0.2 bar) and 6 bar (+/-0.2 bar).

In an embodiment, the synthesis of poly(alkyl acrylate) macroinitiators has a duration that varies between 00:30 min to 07:00 hours.

In an embodiment, the copolymerization of poly(alkyl acrylate), in particular poly(butyl acrylate, with vinyl chloride, in aqueous medium, to obtain poly(vinyl chloride)-b-poly(alkyl acrylate)-b-poly(vinyl chloride), at a constant temperature of 80°C, for 16 hours.

Another aspect of the present disclosure refers to ABA block copolymers obtained by the synthesis process described in the present disclosure wherein the obtained copolymer is flexible.

In an embodiment, the copolymer of the present disclosure does not contain phthalates, nor external plasticisers.

Another aspect of the present disclosure refers to items that comprise the ABA block copolymers obtained by the synthesis method of the present disclosure, said items being films, medical devices, upholsteries, coatings, foams, among others.

### Brief description of the drawings

To an easier understanding, drawings are annexed, which represent preferred embodiments that do not intend to limit the object of the present description.
**Figure 1** - Synthesis diagram of samples of the PVC-b-PBA-b-PVC copolymers and PVC homopolymers for the temperature study.
**Figure 2** - *Stress-strain* curves of the samples of ABA block copolymers: PVC-b-PBA-b-PVC (samples PBL_09/17_II (blue) and PBL_10/17_II (red)) and of the reference PVC sample (black).
**Figure 3** - Schematic representation of the pilot installation which contains a 2 L polymerization reactor.
**Figure 4** - 600 MHz ¹H-RMN Spectra of the samples of ABA block copolymers: PVC-b-PBA-b-PVC (samples PBL_09/17_II (black) and PBL_10/17_II (red)). Solvent: d8-THF.
**Figure 5** - Magnification of the previous 1H-RMN spectra in the spectral zone corresponding to -CH=CH- molecular groups, characteristic of the structural defects - CH=CH-CH₂Cl (samples PBL_09/17_II (black) and PBL_10/17_II (red)).
**Figure 6** - 600 MHz 1H-RMN spectra of the samples of PVC homopolymers (samples PBL_14/17_II (red) and PBL_15/17_II (black)). Solvent: d8-THF.
**Figure 7** - Magnification of the previous ¹H-RMN spectra in the spectral zones corresponding to -CH=CH- groups (zone around 5.8 ppm) and -CH₂Cl (zone around 4.1 ppm) characteristic of the -CH=CH-CH₂Cl structural defects present in the PVC homopolymers matrix (samples PBL_14/17_II (red) and PBL_15/17_II (black)).
**Figure 8****-** FTIR spectra of the samples of ABA block copolymers: PVC-b-PBA-b-PVC (samples PBL_09/17_II (black) and PBL_10/17_II (red)).
**Figure 9** - FTIR spectra of the samples of PVC homopolymers (samples PBL_14/17_II (red) and PBL_15/17_II (black))
**Figure 10** - TGA spectra (or curves) and derivative of the weight curves referring to the samples of ABA block copolymers: PVC-b-PBA-b-PVC (samples PBL_09/17_II (black) and PBL_10/17_II (red)).
**Figure 11** - TGA spectra (or curves) and temporal derivative of the weight curves referring to the samples of PVC homopolymers (samples PBL_14/17_II (green) and PBL_15/17_II (blue)).
**Figure 12** - Graph representation of the variation of the viscoelastic behaviour (by thermomechanical analysis) of the different samples of ABA block copolymers: PVC-b-PBA-b-PVC (samples PBL_09/17_II (blue) and PBL_10/17_II (orange)) in the region of temperatures between -120 and 120°C, obtained at a frequency of 1 Hz.
**Figure 13** **-** Elution curves (molecular exclusion chromatography) for the samples of ABA block copolymers: PVC-b-PBA-b-PVC.
**Figure 14** - Elution curved for the samples of PVC homopolymers.
**Figure 15** - log η *vs* log M_{w} curves (Mark-Houwink-Sakurada graphs) of the samples of block copolymers (to the left) and of the samples of PVC homopolymers (to the right), (IV- intrinsic viscosity (η)).

### Detailed description

The present disclosure is particularly described using preferred embodiments. Therefore, the disclosure is not limited just to the provided descriptions and illustrations. These are used so that the disclosure is sufficiently detailed and comprehensive. Furthermore, the figures are intended for illustrative purposes and not for limiting purposes.

The present disclosure describes the synthesis of ABA block copolymers (PVC-b-PBA-b-PVC) from PBA macroinitiators using the SET-DTLRP technique, with the introduction of temperature step. This introduction of the temperature step is important so that the synthetized block copolymer presents mechanical properties which are identical to those of the plasticised PVC (commercial).

In an embodiment, the synthesis of block copolymers is described with the application of a stepped variation of the copolymerization temperature of polyalkyl acrylate and vinyl chloride in aqueous medium for the obtention of PVC-b-Polyalkyl acrylate-b-PVC. This copolymerization temperature is kept up to a maximum of 42°C for a period of time required for the desired conversion, which can vary between 00:30h to 5:00h and, subsequently, increased by a step or multiple steps to a temperature higher than 50°C until the final conversion is achieved. This variation by a step or multiple steps in the copolymerization temperature is important in order to the synthetized block copolymer presents mechanical properties which are identical to those of flexible PVC which is commonly produced using the post-reactional PVC mixture, with the addiction of external plasticisers.

An embodiment of the process of the present disclosure comprises the following list of regents, used such as received: iodoform (CHI₃, *Alfa Aesar,* 99% purity) or equivalent iodo-organic substance, n-butyl acrylate (n-BA, *IMCD Portugal-Produtos Químicos Lda.,* 99.50% purity) or another acrylic monomer, vinyl chloride (VC, SE PVC B.V., 99,9% purity), sodium hydrogencarbonate (NaHCO₃, *Merck Millipore,* 99% purity), sodium dithionite (Na₂S₂O₄, *Merck Millipore,* 85% purity), polyvinyl alcohol 88% hydrolysed (Alcotex® 8847, *Synthomer),* hydroxypropyl methylcellulose (Methocel® F50, *Dow Chemical Company),* deuterated tetrahydrofuran (dg-THF) *(Euriso-top,* 99.50% purity, +1% TMS (tetramethyl silane)), deuterated chloroform (CDCl₃) *(Euriso-top,* 99.50% purity, +1% TMS (tetramethyl silane)), tetrahydrofuran (THF) *(Panreac,* HPLC degree, extra-pure, 99.85% purity), methanol (CH₃OH) (*Labsolve,* 99.50% purity), deionized water (DW) (conductivity<10µS cm⁻¹), polytetrafluoroethylene (PTFE) and polystyrene standards (PS) (both provided by *Polymer Laboratories).*

An embodiment of the process of the present disclosure further comprises the following list of reagents: VC (99.9% purity, SE PVC B.V.) and suspension PVC (VICIR® S-1200) obtained from the FRP technique, mixed with 62phr *(parts per 100g of resin)* of DOA (Dioctyl adipate) and following mixing processes with PVC perfectly established in the industry and used as reference sample.

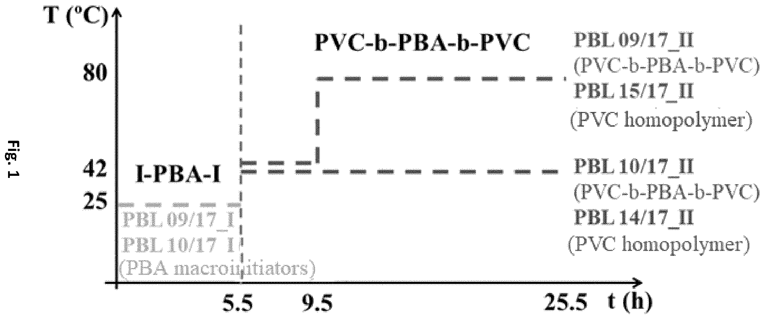

Generically, one of the differences between the procedure of the state of the art and the procedure of the present disclosure (as visible in **Figure 1****)** is the use of a temperature step (typically 42°C to 80°C) in the second phase of the synthesis (VC incorporation) of the ABA block copolymer: PVC-b-PBA-b-PVC. In the state of the art (mainly patents) the use of a temperature in the range from 0°C to 90°C is mentioned, however the use of a temperature step is never discussed, meaning that in those cases constant temperature values are used during the process of copolymer synthesis.

Thus, for comparative purposes between the processes corresponding to the current state of the art (in red) and the new technical solution (in blue), 4 samples were synthetized for study **(****Figure 1****).**

In an embodiment, the ABA block copolymers: PVC-b-PBA-b-PVC obtained by SET-DTLRP can only replace the conventional flexible PVC (PVC obtained from the FRP technique and mixed with external plasticisers in a post-polymerization step) if its mechanical behaviour is similar. Using the procedures described in the state of the art, it was impossible to obtain that kind of mechanical behaviour. Surprisingly, the present disclosure is able to present ABA block copolymers: PVC-b-PBA-b-PVC prepared by SET-DTLRP with mechanical properties similar to those of PVC with external plasticisers.

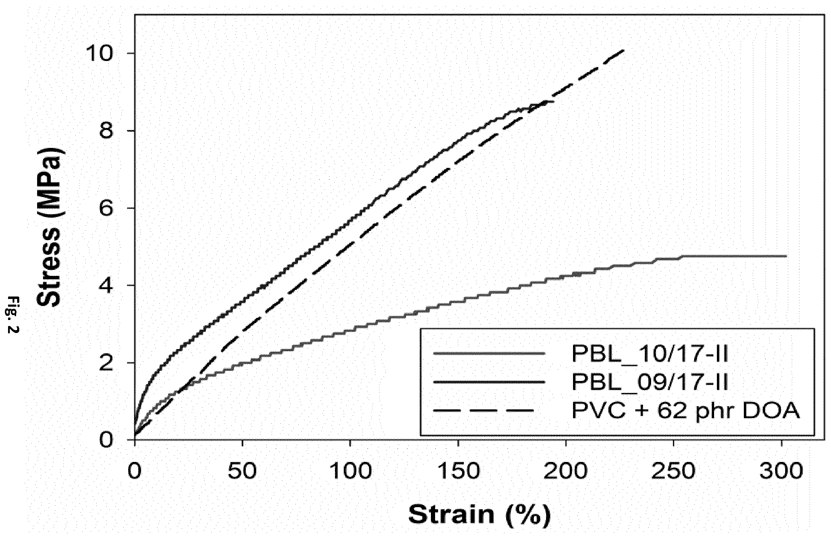

In an embodiment, the previous samples of ABA block copolymers: PVC-b-PBA-b-PVC were subjected to mechanical traction tests, with the purpose of evaluating the impact of the increase in the polymerization temperature (sample PBL_10/17_II prepared at 42°C and sample PBL_09/17_II with a temperature step of 42°C to 80°C) in its mechanical properties. For comparative purposes, it was also decided to subject a reference PVC sample to a mechanical traction test (suspension PVC (Vicir® S-1200) sample obtained from the FRP technique and with a mixture with 62phr of DOA using current plasticising techniques), in order to determine which of the block copolymer samples presented a mechanical behaviour most similar to plasticised PVC **(****Figure 2**).

In an embodiment, the results obtained in the mechanical traction tests demonstrate that at room temperature (test temperature) both block copolymers exhibit a mechanical behaviour which is typical of an elastomer. However, sample PBL_09/17_II presents a more rigid behaviour than sample PBL_10/17_II, that is, presents a lower elongation capacity and a higher resistance to traction. Furthermore, sample PBL_09/17_II exhibits a mechanical behaviour which is more identical to that of plasticised PVC, with 62 phr DOA, thus concluding that the introduction of a polymerization temperature step (newly found solution) allowed obtaining a block copolymer (PBL_09/17-II) with mechanical properties which are more identical to those of plasticised PVC with 62 phr DOA.

A description relative to a more exhaustive characterization of the samples of ABA block copolymers (PVC-b-PBA-b-PVC) and PVC homopolymers is made. For this purpose, several characterization techniques were used which allowed to obtain a complete analysis on the influence of the application of a temperature step in the polymerization reaction on the mechanical, structural, thermal and molecular properties of the block copolymers and PVC homopolymers obtained according to this process.

Regarding the synthesis of the two PVC-b-PBA-b-PVC copolymers, the results obtained by ¹H RMN for the conversion of n-BA (1^{st} step) and VC incorporation (2^{nd} step) are presented in Table 1.

**Table 1 - Synthesis of PVC-b-PBA-b-PVC copolymers.**

| Sample | Conversion of n-butyl acrylate (%) | %m/m VC |
|---|---|---|
| PBL_10 / 17_I¹ | 96.05 | not applicable |
| PBL_09 / 17_I¹ | 94.13 | not applicable |
| PBL_10 / 17_II² | not applicable | 46.99 |
| PBL_09 / 17_II² | not applicable | 49.98 |

| | | |
|---|---|---|
| 1- PBA macroinitiators 2- PVC-b-PBA-b-PVC copolymers wherein sample PBL 10 is produced without temperature step and sample PBL 09 is made with temperature step | | |

From the obtained results, turns out that value of VC incorporation, to which a temperature step was applied in the polymerization process, is higher than when synthetized according to a process which maintains a constant temperature of 42°C.

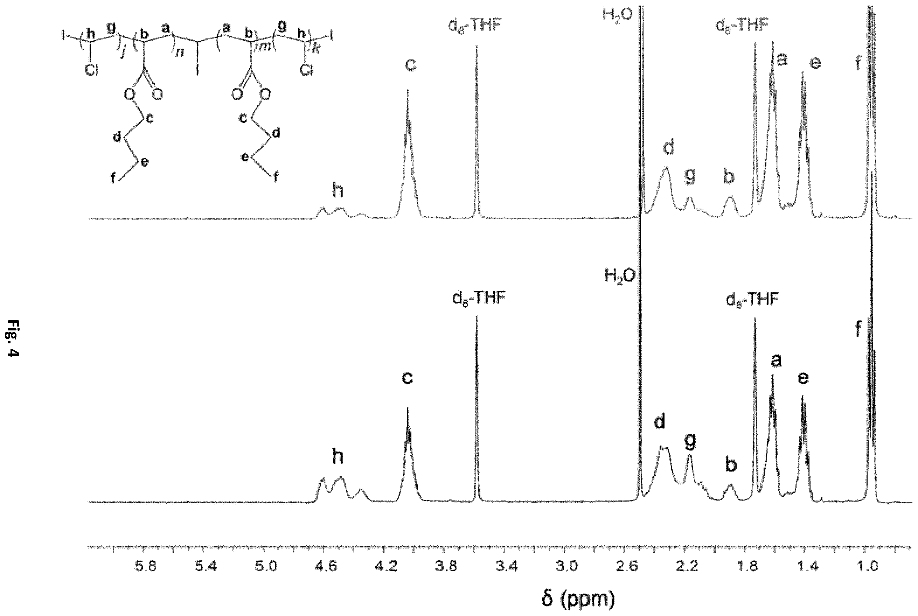

With the purpose of evaluating the impact of the polymerization temperature step (from 42°C to 80°C) during the second phase of copolymerization, both samples of block copolymers previously purified were subjected to a ¹H RMN analysis (Figure 4).

The success of both block copolymerizations can be confirmed by the analysis of the ¹H RMN spectra, since it is possible to observe the presence of the signals corresponding to molecular groups which are characteristic of the PVC repetition unit (-CH₂-CHCl-): -CHCl-**(h,** [4.2-4.7] ppm) and -CH₂- **(g,** [2.0-2.3] ppm) and of the signals corresponding to molecular groups which are characteristic of PBA: -CH₂O (c, [3.8-4.2] ppm), -CH- **(b,** [1.8-2.1] ppm), CH₃- **(f,** [0.8-1.2] ppm) and -CH₂- **((e,** [1.2-1.5] ppm), **(a,** [1.5-1.8] ppm) and **(d,** [2.3-2.6] ppm)). [3-6]

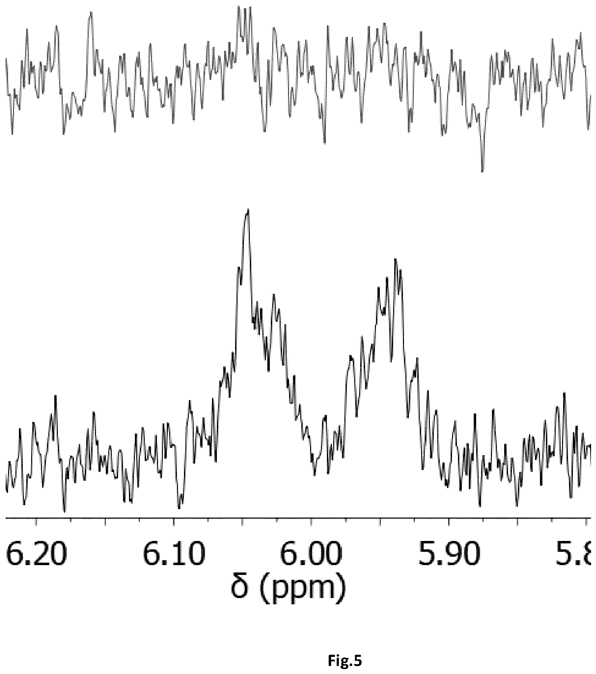

In Figure 5 the magnification of spectral zone around 6.0 ppm corresponding to - CH=CH- molecular groups which are characteristic of the -CH=CH-CH₂Cl structural defects is represented.

It is described that sample PBL_10/17_II was obtained at a low and constant polymerization temperature (42°C), so the presence of structural defects in the block copolymer matrix is minimal, hence the signals referring to -CH=CH- groups present a very low intensity, being impossible to obtain the concentration of these defects. The concentration of structural defects of the -CH=CH-CH₂Cl type present in sample PBL_09/17_II was obtained by the integration of two signals: the signal corresponding to - CHCl- molecular group (h, [4.2-4.7] ppm, Figure 4) characteristic of the PVC repetition unit (-CH₂-CHCl-) and the signal referring to the -CH=CH- molecular group ([5.9-6.1] ppm, Figure 5) characteristic of the structural defect. A ((-CH=CH-CH₂Cl)/(-CH₂-CHCl-)) molar ratio of 6/1000 was obtained, meaning that, for each thousand repetition units (VC units), in average, six structural defects of the -CH=CH-CH₂Cl type are formed. Thus, it is possible to conclude that the application of a temperature step in the polymerization reaction (from 42°C to 80°C) during the second phase of copolymerization leads to an increase in the concentration of structural defects in the PVC blocks in the copolymers.

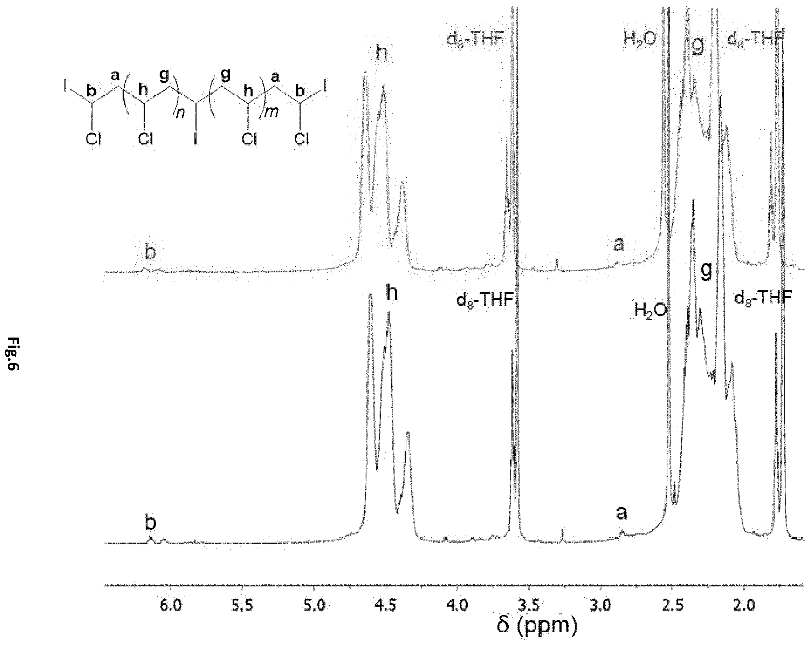

With the purpose of explaining the reason for the spectral differences observed in the ¹H RMN spectra of the samples of block copolymers, samples of PVC homopolymers synthetized with procedures similar to copolymers, were also subjected to a ¹H RMN analysis (Figure 6).

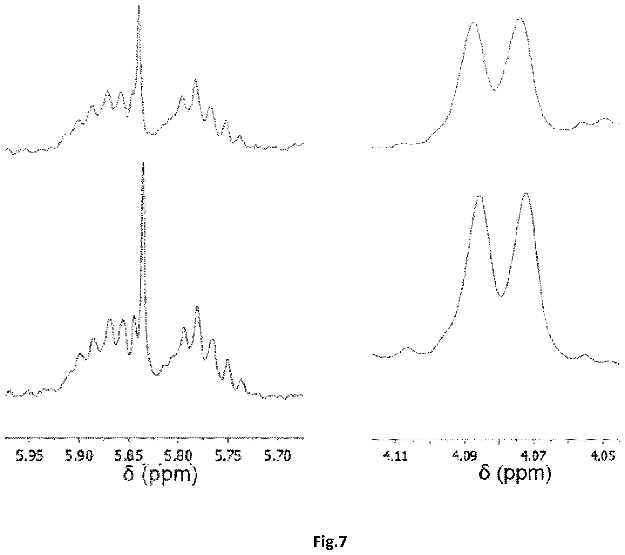

By analysing in detail the ¹H RMN spectra of the samples of PVC homopolymers it was possible to identify differences, since the ¹H RMN spectra of the samples of PVC homopolymers exhibit signals with different intensities in the spectral zones around 5.8 ppm and 4.1 ppm. These signals correspond to -CH=CH- and -CH₂Cl molecular groups which result from the appearance of structural defects of the -CH=CH-CH₂Cl type (Figure 7).

By comparing the signal intensities of the hydrogen atoms of the groups involved in integration (-CHCI- and -CH=CH-, -CHCl- and -CH₂Cl), a ((-CH=CH-CH₂Cl)/(-CH₂-CHCl-)) molar ratio of 1.7/1000 was obtained for sample PBL_14/17_II and of 1.9/1000 for sample PBL_15/17_II. Even though the difference is not high, again there was a higher incidence of structural defects in the PVC sample synthetized with temperature step (from 42°C to 80°C). This result is in accordance with the results obtained for the corresponding copolymers.

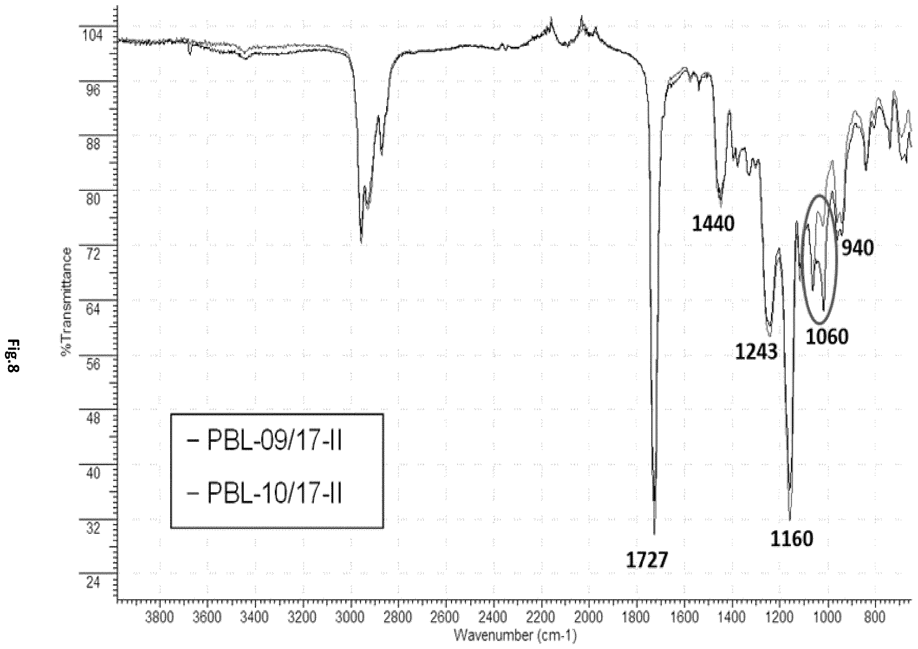

With the purpose of evaluating the impact of the polymerization temperature step (from 42°C to 80°C) during the second phase of copolymerization, both samples of block copolymers previously purified were subjected to a FTIR analysis (Figure 8).

By analysing Figure 8, it can be seen that the FTIR spectra of both samples of block copolymers exhibit absorption peaks which are characteristic of the two polymers (PBA and PVC) involved in its formation, which shows evidence for the block copolymerization success. After a more detailed analysis, it was possible to identify a difference between the FTIR spectra, approximately in the 1060 cm⁻¹ zone. After a search on which chemical groups could be responsible for this spectral difference, it was not possible to find this information even considering the possibility that those are the molecular groups defined in the ¹H RMN analysis, that is, -CH=CH- and -CH₂Cl molecular groups, characteristic of the structural defects of the -CH=CH-CH₂Cl type.

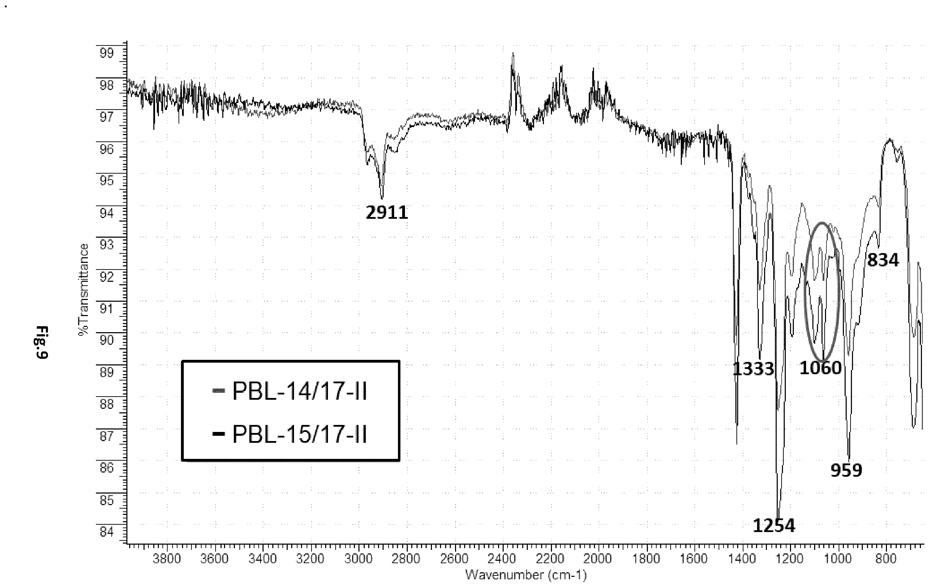

In order to find an explanation for the reason of the spectral differences observed in the FTIR spectra of the samples of block copolymers, both samples of PVC homopolymers were subjected to a FTIR analysis (Figure 9).

By analysing in detail the FTIR spectra of the samples of PVC homopolymers it was possible to identify a difference between them, approximately at 1060 cm⁻¹. The fact that the mentioned differences were observed, approximately at 1060 cm⁻¹, in both FTIR spectra of the samples of PVC homopolymers and the FTIR spectra of the samples of block copolymers, strengthens the hypothesis that in both cases, the observed differences are the result of the increase in the incidence of structural defects which are, in turn, originated from the application of a polymerization temperature step (from 42°C to 80°C).

With the purpose of evaluating the impact of the polymerization temperature step (from 42°C to 80°C) during the second phase of copolymerization in the thermal stability of the block copolymers, both samples of block copolymers were subjected to a TGA analysis.

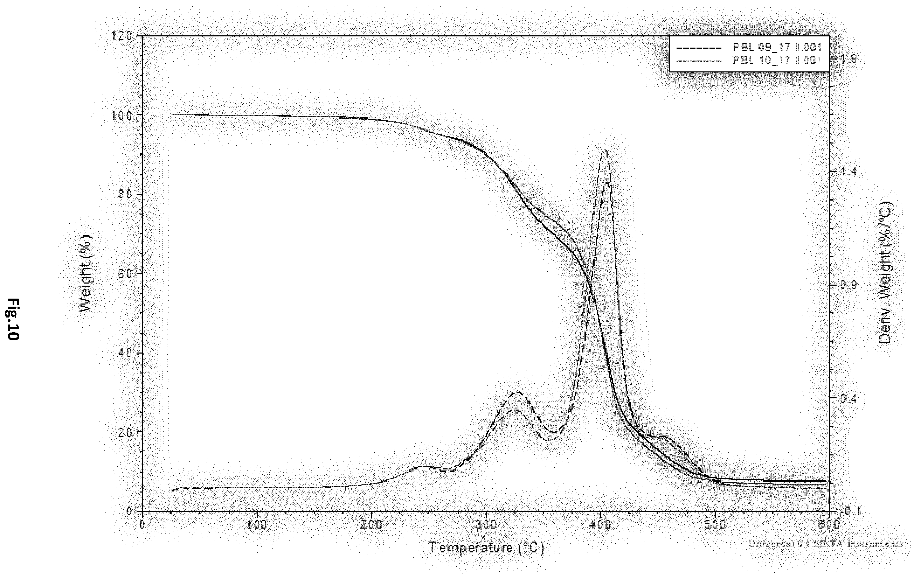

In Figure 10 TGA spectra (or curves) and the derivative of the weight curves referring to the samples of block copolymers are represented. From the analysis of the figure, it is observed that an almost total overlapping of the TGA spectra referring to the block copolymers samples occurs along the whole region of temperatures between room temperature and 600°C, although in the region of temperatures referring to the first stage of degradation (region between 275 and 350°C) the mass loss of sample PBL_09/17_II is slightly higher than that seen in case of sample PBL_10/17_II, this higher mass loss being visible by the temporal derivative of the weight curves referring to the samples. Thus, the samples of block copolymers present a very similar thermal stability, concluding that the existence of the temperature step did not have any impact in the thermal stability.

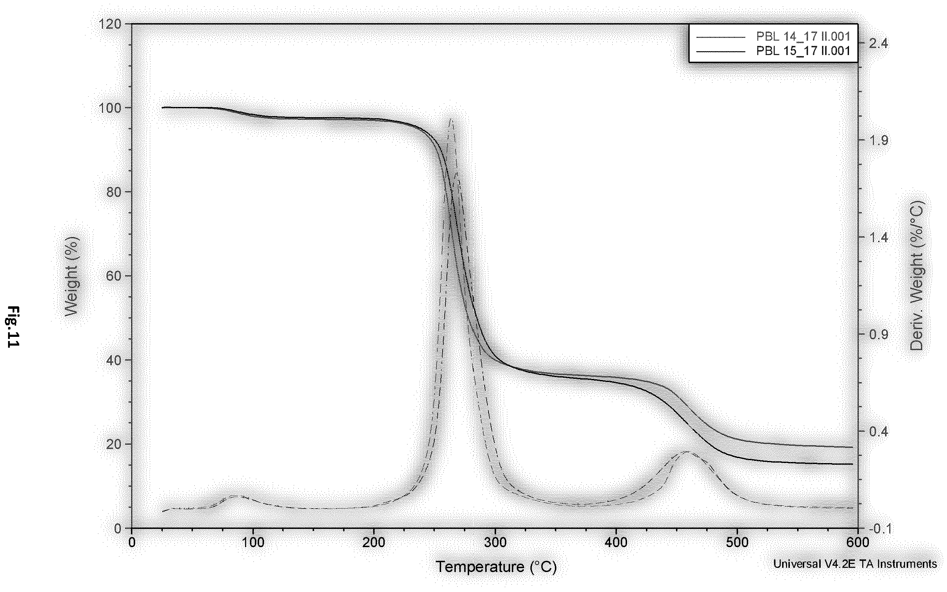

By analysing Figure 11, it appears that an almost total overlapping of the TGA spectra referring to the samples of PVC homopolymers occurs along the whole region of temperatures between room temperature and 600°C. Thus, it is possible to conclude that the samples of PVC homopolymers present a very similar behaviour in terms of thermal stability. The results obtained by the TGA analysis indicate that there was no significant change in the thermal stability of the block copolymers and the PVC homopolymers with the application of the polymerization temperature step from 42°C to 80°C.

With the purpose of evaluating the impact of the application of the polymerization temperature step (from 42°C to 80°C) during the second phase of copolymerization, in the glass transition temperature (T_{g}) of the block copolymers, both samples of block copolymers were subjected to a DMTA analysis.

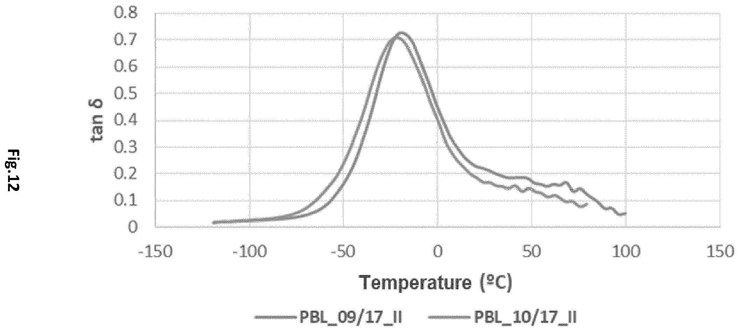

In Table 2 and in Figure 12 the graphs of the variation of the viscoelastic behaviour are represented (viscoelasticity curves) and some mechanical and thermal parameters of the different samples of block copolymers are indicated, in the region of temperatures between -120°C and 120°C, obtained at a frequency of 1 Hz.

**Table 2 - Mechanical and thermal parameters obtained from the DMTA analysis**

| Sample | T_{g} (°C) (1Hz) | E'(25°C, 1 Hz)(kJ/mol) | ΔH (25°C, 1 Hz)(kJ/mol) | Tan δ max (1Hz) | T_{g}^{th} (°C)¹ |
|---|---|---|---|---|---|
| PBL_09/17_II | -19.70 | 6.60 | 116.10 | 0.70 | 8.60 |
| PBL_10/17_II | -22.10 | 6.10 | 112.10 | 0.70 | 4.80 |

| | | | | | |
|---|---|---|---|---|---|
| ¹Data obtained by the Fox equation. | | | | | |

By analysing the results of Figure 12 and Table 2, it can be seen that the block copolymer corresponding to sample PBL_09/17_II presents higher T_{g} and storage modulus (E'). This is in line with the planned, since the block copolymer referring to sample PBL_09/17_II is the most rigid. However, comparing the T_{g} values obtained for both samples, it appears that these are very similar. Therefore, it is concluded that the small differences in composition (of PBA and PVC) present in the block copolymers did not induce significant changes in the T_{g} of the block copolymers. Thus, it can be stated that the difference in the obtained mechanical behaviour (Figure 2) in the two copolymers cannot be explained by the small difference in composition or consequently by the small difference in T_{g} value taken from the DMTA analysis.

The samples of block copolymers and PVC homopolymers were subjected to a GPC/SEC analysis, with the purpose of evaluating the impact of the polymerization temperature step (from 42°C to 80°C) in their molecular properties.

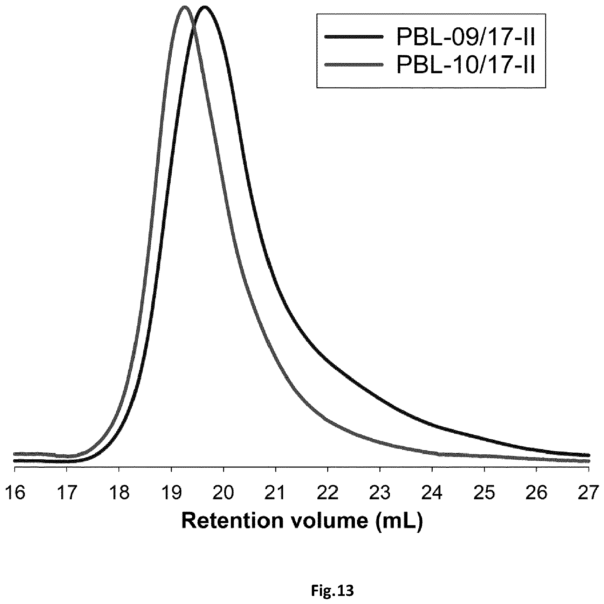

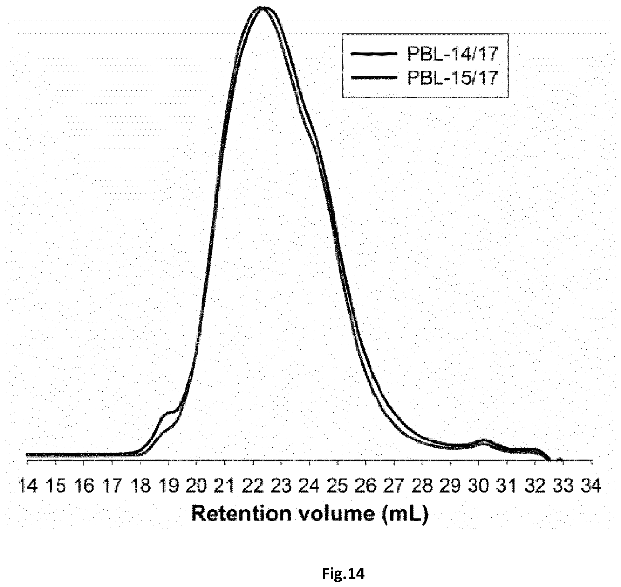

In Figures 13 and 14 and Table 3 the elution curves, the numeric average molecular weights measured by the SEC equipment (Mₙ^{SEC}), the theoretical numeric average molecular weights (Mₙ^{th}) and the polydispersity indexes (PDI) of said samples are represented.

**Table 3 - Mₙ^{SEC}, Mₙ^{th} and PDI of the samples of ABA block copolymers: PVC-b-PBA-b-PVC and PVC¹homopolymers.**

| Sample | Mₙ^{th} (g/mol) | Mₙ^{SEC} (g/mol) | PDI |
|---|---|---|---|
| PBL_09/17_II | 191655² | 65208 | 2.827 |
| PBL_10/17_II | 191655² | 140193 | 1.876 |
| PBL_14/17_II | 11250³ | 14585 | 2.631 |
| PBL_15/17_II | 11250³ | 15435 | 2.378 |

| | | | |
|---|---|---|---|
| ¹Used conventional calibration. theoretical molecular weight of PVC for a target polymerization degree of 2100 (assuming 50% conversion): M_{n,PVC-PBA} = 2100*0.5*M_{VC} + 980*0,9 M_{BA}+M_{CHI3} = 191655 Da (g/mol). ³ Theoretical molecular weight of PVC for a target polymerization degree of 200 (assuming 90% conversion): M_{n,PVC}= 200*0.9*M_{VC} = 11250 Da (g/mol). | | | |

By analysing the results presented in Table 3, it can be seen that the sample PBL_09/17_II PDI is higher than 2, while that of sample PBL_10/17_II is substantially lower. However, sample PBL_09/17_II was synthetized with the existence of a polymerization temperature step (from 42°C to 80°C) during the second phase of copolymerization. The existence of structural defects, mainly tertiary chlorines, may lead to branching sites leading to the formation of non-linear polymeric chains in the structures of the block copolymers. These branches result in a loss of linearity of the physicochemical properties as a function of the molecular weight of the block copolymers, thus leading to a lower Mₙ^{SEC} value construed by the equipment and consequently to an increase in its PDI.

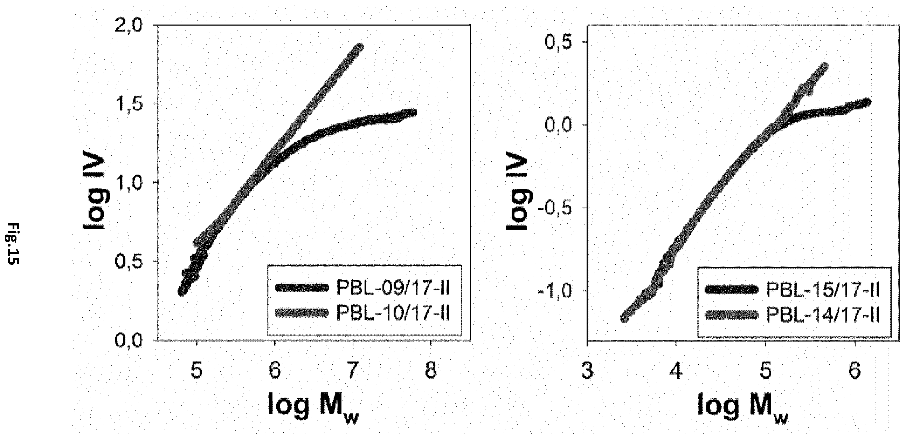

By analysing Figure 15 it can be seen that for the samples synthetized with the application of the temperature step in the polymerization reaction (from 42°C to 80°C) during the second phase of copolymerization (samples PBL_09/17_II and PBL_15/17_II) log η (or log IV (intrinsic viscosity)) does not increase linearly with log M_{w}. In fact, the increase in the polymerization temperature may lead to the formation of large branches in the structures of the block copolymers and the PVC homopolymers. These branches change the rheological behaviour, since the intrinsic viscosity (η) of the branches composing the block copolymers and the PVC homopolymers is lower than that of its linear counterparts with the same M_{w} of the branches. Consequently, as the polymerization temperature increases, the slope of the log η *vs* log M_{w} curve is less and less pronounced in the region of higher M_{w}. Thus, it could be concluded that the formation of these branches leads to the log η *vs* log M_{w} curves corresponding to PBL_09/17_II and PBL_15/17_II ceasing to exhibit a linear behaviour in the region of higher M_{w}.

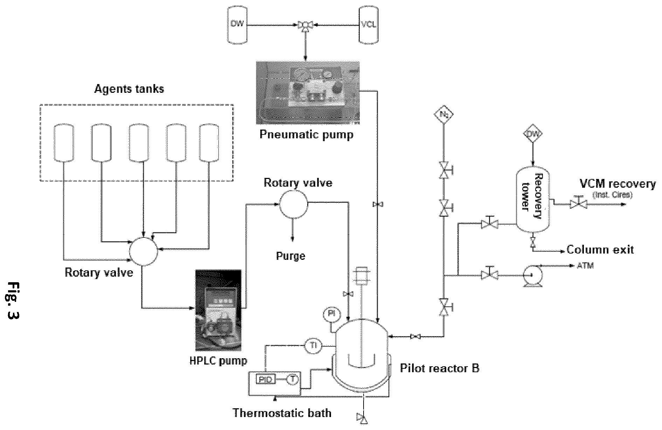

In an embodiment, the synthesis of the samples of PBA macroinitiators, the samples of block copolymers and the samples of PVC homopolymers occurred in a pilot installation. In Figure 3 a scheme of the pilot installation is represented.

In an embodiment, the installation is equipped with a 2 L polymerization reactor, provided with a stirring and reaction temperature control system. This installation also includes tanks; a pneumatic pump of deionized water and vinyl chloride (VC) load to the reactor; an HPLC pump which transfers the suspension agents and the remaining reagents from the tanks to the reactor; a thermostatic bath provided with a linear temperature controller of the PID type that allows to control the reactor's temperature; a vacuum pump which allows to remove the oxygen present in the reactor's interior; as well as an automatic valve set and manuals that aid in the operation control.

In an embodiment, for the synthesis of PBA macroinitiators and for a target polymerization degree (DP) of 980, two solutions were previously prepared: an aqueous solution with 3% PVA88 (0.383 g of PVA88) and an aqueous solution A which contained 0.186 g of NaHCO₃ (2.214 mmol). Aqueous solution A was then stirred and bubbled with nitrogen for a determined period of time, in order to remove the oxygen present in the water. After the oxygen removal from water, 1.061 g of Na₂S₂O₄ catalyst (6.094 mmol) were dissolved in aqueous solution A. Then, the 2 L reactor was loaded with the raw materials necessary to the synthesis of the samples of PBA macroinitiators, the aqueous solution with 3% PVA88 being initially added, followed by the addition of 0.600 g of the CHI₃ initiator (1.524 mmol), the addition of 0.218 L of the n-BA monomer (1.521 mol) and, finally, the addition of 0.586 L of deionized water. After the addition of the raw materials to the reactor, the reactor was closed, adjusting the stirring speed to 200 rpm. In order to remove the oxygen present inside the reactor, several cycles of nitrogen introduction and vacuum operation by the vacuum pump were then performed. Afterwards, the catalyst (Na₂S₂O₄) dissolved in aqueous solution A was added to the reactor, it being loaded in an automatic way by the HPLC pump. Next, the reactor was pressurized with nitrogen for the reaction to be conducted under a nitrogen atmosphere, thus increasing the operating pressure of the reactor to 4 bar. Temperature was kept at 25°C for 5 and a half hours of reaction, and after this period of time, the reactor was cooled down and depressurized. In the end of the reactions, samples of PBA macroinitiators (samples PBL_09/17_I and PBL_10/17_I) were collected, to be subjected to analysis and characterization.

In a preferred embodiment, to obtain better results, a synthesis of ABA block copolymers: PVC-b-PBA-b-PVC is performed. After the removal of small samples of PBA macroinitiators for characterization purposes, experimental procedures relative to the synthesis of block copolymers to a target polymerization degree (DP) of 2100 were initiated. Thus, three solutions were initially prepared: an aqueous solution with 3% PVA88 (0.373 g of PVA88), an aqueous solution with 1.86% Methocel F50 (0.160 g of Methocel F50) and an aqueous solution B that contained 0.512 g of NaHCO₃ (6.095 mmol). Aqueous solution B was later stirred and bubbled with nitrogen for a determined period of time, in order to remove the oxygen present in the water. After the removal of the oxygen present in the water, 2.123 g of Na₂S₂O₄ catalyst (12.193 mmol)were dissolved in aqueous solution B. Then, the 2 L reactor, in which the PBA macroinitiator was already found, was loaded with the raw materials necessary to the synthesis of the block copolymers. Initially, an aqueous solution with 3% of PVA88 was added, followed by the addition of the Methocel F50 aqueous solution, and finally the addition of 0.381 L of deionized water. After the addition of the raw materials to the reactor, the reactor was closed, and the stirring speed was adjusted to 300 rpm. After the application of the respective cycles of nitrogen introduction inside the reactor and vacuum operation, 0.209 L of monomer (VC) (3.010 mol) were added, this being loaded in an automatic way by the pneumatic pump. Next, the catalyst (Na₂S₂O₄)dissolved in aqueous solution B was added to the reactor and the reactor temperature was increased to 42°C for 4 hours of reaction, being that there was a natural increase of the saturation pressure of the mixture from ^{∼}2.9 bar to ^{∼}5.3 bar.

After 4 hours of reaction, two different experimental procedures were adopted. In the first case (procedure described in the state of the art), the temperature was kept at 42°C for further 16 hours of reaction (synthesis of sample PBL_10/17_II). In the second case (procedure of the new solution), after these 4 horas of reaction, the reactor temperature was increased to 80°C (in this case, there was an increase of the saturation pressure of the mixture from ^{∼}5.3 bar to ^{∼}14.1 bar), being kept like this for 16 additional hours of reaction (synthesis of sample PBL_09/17_II). After 20 hours of reaction, the reactor was cooled down and depressurized, the depressurization of the reactor being performed maintaining the temperature at 42°C and allowed to remove the excess of VC that did not react (residual VC). In the end of the reaction, the block copolymers were subjected to washing with deionized water and, afterwards, placed in a vacuum oven to be dried until they reached a constant mass. After drying, two samples of block copolymers (samples PBL_09/17_II and PBL_10/17_II) were collected to be subject of analysis and characterization.

### Synthesis of PVC homopolymers

In an embodiment, for the synthesis of PVC homopolymers and for a target polymerization degree (DP) of 200, three solutions were previously prepared: an aqueous solution with 3% PVA88 (19.600 g of PVA88), an aqueous solution with 1.86% Methocel F50 (13.550 g of Methocel F50) and an aqueous solution C which contained 6.050 g of NaHCO₃ (72.015 mmol). Aqueous solution C was then stirred and bubbled with nitrogen for a determined period of time, in order to remove the oxygen present in the water. After the removal of the oxygen present in the water, 16.710 g of Na₂S₂O₄ catalyst (95.974 mmol) were dissolved in aqueous solution C. Then, the 2 L reactor was loaded with the raw materials necessary to the synthesis of the samples of PVC homopolymers, the aqueous solution with 3% PVA88 being initially added, followed by the addition of the aqueous solution of Methocel F50, the addition of 9.450 g of the CHI₃ initiator (24.001 mmol), and finally the addition of 0.667 L of deionized water. After the addition of the raw materials to the reactor, the reactor was closed, adjusting the stirring speed to 300 rpm. After the application of the respective cycles of introduction of nitrogen inside the reactor and vacuum operation, 0.333 L of monomer (VC) (4.795 mol) were added to the reactor. Next, the catalyst (Na₂S₂O₄) dissolved in aqueous solution C was added and the reactor temperature was increased to 42°C for 4 hours of reaction.

After 4 hours of reaction, two different experimental procedures were adopted. In the first case (procedure described in the state of the art), the temperature was kept at 42°C for further 16 hours of reaction (synthesis of sample PBL_14/17_II). In the second case (procedure corresponding to the new solution), after these 4 hours of reaction, the reactor temperature was increased to 80°C, being kept like this for 16 additional hours (synthesis of sample PBL_15/17_II). After 20 hours of reaction, the reactor was cooled down and depressurized, the depressurization of the reactor being performed maintaining the temperature at 42°C. In the end of the reaction, two samples of PVC homopolymers (samples PBL_14/17_II and PBL_15/17_II) were collected to be subject of analysis and characterization.

In an embodiment, procedures of synthesis of ABA block copolymers (PVC-b-PBA-b-PVC) from PBA macroinitiators were tested, using the SET-DTLRP technique, with the application of a temperature step (of 42°C to 60°C and of 42°C to 70°C).

In an embodiment, procedures of synthesis of ABA block copolymers (PVC-b-PBA-b-PVC) from PBA macroinitiators with different polymerization degrees [DP(PBA)=490 + DP(PVC)=4200 and DP(PBA)=1960 + DP(PVC)=1050] were tested, using the SET-DTLRP technique, with the application of a temperature step (from 42°C to 80°C). The above-mentioned embodiments are combinable with each other.

**Table 4 - Rupture tension, elongation in rupture, and Young's modulus of the samples of ABA block copolymers: PVC-b-PBA-b-PVC and of PVC¹ homopolymers.**

| **Samples** | **Rupture tension (MPa)** | **Elongation in rupture (%)** | **Young's Modulus (MPa)** |
|---|---|---|---|
| **PBL_09/17_II** | 8.75 | 194 | 0.192 |
| **PBL_10/17_II** | 4.75 | 302 | 0.096¹ |
| **PVC-62 phr DOA** | 10.1 | 226 | 0.046¹ |

The term "comprises" or "comprising" when used in this document is intended to indicate the presence of the mentioned features, elements, integers, steps and components, but does not preclude the presence or the addition of one or more other features, elements, integers, steps and components, or groups thereof.

The present invention is of course in no way restricted to the embodiments described in this document and a person with ordinary skills in the art can foresee many possibilities of modifications thereof and of substitutions of technical features by other equivalents, depending on the requirements of each situation, such as defined in the appended claims.

The following claims additionally define preferred embodiments.

## Claims

1. Method of obtaining poly(vinyl chloride)-b-poly(n-butyl acrylate)-b-poly(vinyl chloride) - ABA block copolymers, by single electron transfer-degenerative chain transfer mediated living radical polymerization - SET-DTLRP comprising
acrylic monomers and vinyl chloride macroinitiators,
wherein the polymerization step includes at least the introduction of an increase in the temperature of vinyl chloride copolymerization, in aqueous medium,
wherein the polymerization temperature increases to values comprised between 50°C to 90°C.

2. Method of obtaining copolymers according to the preceding claim wherein the increase in the copolymerization temperature is obtained by the introduction of at least: a temperature step; a ramped increase in temperature; or combinations thereof.

3. Method of obtaining copolymers according to the preceding claim wherein the polymerization step includes at least an introduction of an isothermal step of temperature in the temperature of copolymerization with vinyl chloride, in aqueous medium, wherein the isothermal level of the step in the polymerization temperature may be in a temperature between 50°C to 90°C.

4. Method of obtaining copolymers according to the preceding claim wherein the polymerization step includes at least a step in the polymerization temperature after approximately 1/5 of the time of final copolymerization has elapsed.

5. Method of obtaining copolymers according to the preceding claim wherein the isothermal level of the step in the polymerization temperature may be in a temperature between 60°C to 85°C.

6. Method of obtaining copolymers according to the preceding claim wherein the isothermal level of the step in the polymerization temperature is of 80°C.

7. Method of obtaining copolymers according to any of the preceding claims wherein the acrylic monomer macroinitiator is an alkyl acrylate macroinitiator.

8. Method of obtaining copolymers according to the preceding claim wherein the acrylic monomer macroinitiator of alkyl acrylate is poly(butyl acrylate) - PBA.

9. Method of obtaining copolymers accordingto the preceding claim wherein the alkyl acrylate monomer macroinitiator is obtained by polymerization of BA.

10. Method of obtaining copolymers according to any of the preceding claims wherein the synthesis of poly(alkyl acrylate) macroinitiators, preferably PBA, occurs at a constant temperature between 15 to 50°C, preferably 25°C.

11. Method of obtaining copolymers according to any of the preceding claims wherein the poly(alkyl acrylate) macroinitiators comprise a polymerization degree of at least 400.

12. Method of obtaining copolymers according to any of the preceding claims wherein the poly(alkyl acrylate) macroinitiators comprise a polymerization degree of at most 4500.

13. Method of obtaining copolymers of according to any of the preceding claims wherein the poly(alkyl acrylate) macroinitiators comprise a polymerization degree that varies between 490-1960.

14. Method of obtaining copolymers according to any of the preceding claims wherein the poly(alkyl acrylate) macroinitiators comprise a degree that varies between 980-1050.

15. Method of obtaining copolymers according to any of the preceding claims wherein the synthesis of poly(alkyl acrylate) macroinitiators comprises a pressure of 2.9 bar (+/-0.1 bar) and 5.3 bar (+/-0.2 bar).

16. Method of obtaining copolymers according to any of the preceding claims wherein the synthesis of poly(alkyl acrylate) macroinitiators has a time duration that varies between 00:30 min to 04:00 hours.

17. Method of obtaining copolymers according to any of the preceding claims wherein the copolymerization of poly(alkyl acrylate), in particular poly(butyl acrylate), with vinyl chloride, in aqueous medium, for obtaining Poly(vinyl chloride)-b-Poly(alkyl acrylate)-b-Poly(vinyl chloride), comprises a constant temperature of 80°C, for 16 hours.

18. ABA block copolymer obtained by the method described in any of the preceding claims wherein the copolymer is flexible.

19. ABA block copolymer according to the preceding claim wherein the copolymer does not contain phthalates or adipates.

20. Items comprising the ABA block copolymers obtained by the method described in any of the preceding claims 1-15 or the copolymer described in any of the preceding claims 16-18.

21. Items according to the preceding claim wherein the item does not contain phthalates or adipates.

22. Items according to any of the claims 20-21 wherein the items are films, medical devices, upholsteries, coatings, foams.
